Europäisches Patentamt

European Patent Office

Office européen des brevets

(19)

(11) Veröffentlichungsnummer: **0 254 022**

**A2**

(12) # EUROPÄISCHE PATENTANMELDUNG

(21) Anmeldenummer: 87108560.1

(22) Anmeldetag: 13.06.87

(51) Int. Cl.⁴: **C08F 210/16** ,
//(C08F210/16,218:04,216:12,2-20:12)

(30) Priorität: 26.06.86 DE 3621394

(43) Veröffentlichungstag der Anmeldung:
27.01.88 Patentblatt 88/04

(84) Benannte Vertragsstaaten:
AT BE CH DE ES FR GB IT LI LU NL SE

(71) Anmelder: **Ruhrchemie Aktiengesellschaft**
**Bruchstrasse 219**
**D-4200 Oberhausen 11(DE)**

(72) Erfinder: **Hobes, John, Dr.Dipl.-Chem.**
**Ernastrasse 2 b**
**D-4220 Dinslaken(DE)**
Erfinder: **Payer, Wolfgang, Dr.-Dipl.-Chem.**
**Zedernweg 58**
**D-4230 Wesel 1(DE)**
Erfinder: **Bexten, Ludger, Dr.-Dipl.-Chem.**
**Im Freihof 9**
**D-4224 Hünxe(DE)**

(74) Vertreter: **Reichelt, Karl-Heinz, Dr. et al**
**Ruhrchemie Aktiengesellschaft Abt. PLD**
**Postfach 13 01 60**
**D-4200 Oberhausen 11(DE)**

(54) Mischpolymerisate des Ethylens, Verfahren zu ihrer Herstellung und ihre Verwendung.

(57) Die vorliegende Erfindung betrifft Mischpolymerisate des Ethylens, die je l00 Gew.-Teile Ethylen 0,2 bis 5,0 Gew.-Teile 2,4,4-Trimethylpenten-(l) und gegebenenfalls 2,0 bis 20 Gew.-Teile Vinylester oder Vinylether oder Ester der Acrylsäure oder der Methacrylsäure mit Alkoholen, die l bis 8 Kohlenstoffatome aufweisen, enthalten und ein Verfahren zu ihrer Herstellung. Die Mischpolymerisate haben einen Schmelzindex MFI (l90/2,l6) von 0,4 bis 20 g/l0 min, eine Dichte von 0,9l5 bis 0,960 g/cm³ und eine Schlagzugzähigkeit von 850 bis 2.600 mJ/mm². Sie lassen sich zu transparenten Folien verarbeiten.

EP 0 254 022 A2

## Mischpolymerisate des Ethylens, Verfahren zu ihrer Herstellung und ihre Verwendung

Die vorliegende Erfindung betrifft binäre und ternäre Mischpolymerisate des Ethylens. Die binären Mischpolymerisate bestehen aus Ethylen und 2,4,4-Trimethylpenten-(I), die ternären enthalten zusätzlich einen Vinylester, einen Vinylether oder einen Ester der Acrylsäure oder der Methacrylsäure. Die Mischpolymerisate haben einen Schmelzindex MFI (I90/2,I6) von 0,4 bis 20 g/I0 min, eine Dichte von 0,9I5 bis 0,960 g/cm$^3$ und eine Schlagzugzähigkeit von 850 bis 2.600 mJ/mm$^2$.

Ferner betrifft die vorliegende Erfindung ein Verfahren zur Herstellung der erfindungsgemäßen Mischpolymerisate durch gemeinsame Umsetzung der Monomeren unter den Bedingungen der radikalisch initiierten Hochdruckpolymerisation.

Die neuen Mischpolymerisate eignen sich aufgrund ihrer vorzüglichen Eigenschaften besonders zur Herstellung von Folien.

Die DE-AS 20 I8 7I8 beschreibt ein Verfahren zur Herstellung von modifizierten Hochdruckpolyethylenen, bei dem die Polymerisation des Ethylens sowie gegebenenfalls andere, mit Ethylen copolymerisierbare Verbindungen, in Gegenwart von Oligomeren des Isobutylens, die aus 4 bis I00 Isobutyleneinheiten aufgebaut sind, durchgeführt wird.

Die nach dem Verfahren der DE-AS 20 I8 7I8 gewonnenen Polymerisate eignen sich zur Herstellung von Folien. Der Zusatz von Oligomeren des Isobutylens bewirkt, daß die als Blocken bezeichnete Oberflächenklebrigkeit der Folien vermieden wird.

Verwendet man dagegen Diisobutylen, so erhält man inhomogene Polymerisate. Die daraus hergestellten Folien sind trübe und weisen Stippen auf (vgl. DE-AS 20 I8 7I8, Spalte 2, Zeilen 32 bis 38 und Spalte 6, Vergleichsbeispiel 2). Sie sind daher für Verpackungszwecke ungeeignet.

An Folien, die als Verpackungsmaterial für insbesondere bei tiefen Temperaturen gelagerte Waren dienen, werden bestimmte Anforderungen gestellt. Sie sollen hohe Transparenz, Steifigkeit, Glanz und gute Schlagzugzähigkeit besitzen. Diese Eigenschaften müssen auch bei tiefen Temperaturen erhalten bleiben.

Der vorliegenden Erfindung liegt die Aufgabe zugrunde, Mischpolymerisate des Ethylens, die Folien mit diesen gewünschten Eigenschaften liefern, und ein Verfahren zur Herstellung der Mischpolymerisate bereitzustellen.

Gelöst wird diese Aufgabe durch Mischpolymerisate des Ethylens, die je I00 Gew.-Teile Ethylen 0,2 bis 5,0 Gew.-Teile 2,4,4-Trimethylpenten-(I) und gegebenenfalls 2,0 bis 20,0 Gew.-Teile Vinylester oder Vinylether oder Ester der Acrylsäure oder der Methacrylsäure mit aliphatischen $C_1$-bis $C_8$-Alkoholen enthalten, einen Schmelzindex MFI (I90/2,I6) von 0,4 bis 20 g/I0 min, eine Dichte von 0,9I5 bis 0,960 g/cm$^3$ und eine Schlagzugzähigkeit von 850 bis 2.600 mJ/mm$^2$ besitzen.

Die binären Mischpolymerisate enthalten je I00 Gew.-Teile Ethylen 0,2 bis 5,0, insbesondere 0,3 bis 4,0, bevorzugt 0,35 bis 3,5 Gew.-Teile 2,4,4-Trimethylpenten-(I).

Die ternären Mischpolymerisate bestehen aus Ethylen, 2,4,4-Trimethylpenten-(I) und einem weiteren Monomeren der folgenden Stoffgruppe: Vinylester, Vinylether, Acrylsäureester oder Methacrylsäureester. Besonders geeignet als Monomere sind Vinylester und die Ester der Acrylsäure oder der Methacrylsäure, bevorzugt werden Acrylsäureester und insbesondere Vinylester.

Unter den Vinylestern kommen insbesondere solche in Betracht, deren Carbonsäurereste 2 bis 4 Kohlenstoffatome enthalten, vorzugsweise Vinylacetat. Die bevorzugten Vinylether enthalten 4 bis 8 Kohlenstoffatome. Ein Beispiel für diese Verbindungen ist der Vinylethylether. Die Acrylsäureester und Methacrylsäureester leiten sich von aliphatischen Alkoholen mit I bis 8 Kohlenstoffatomen im Molekül ab. Die Alkohole können geradkettig oder verzweigt sein und die OH-Gruppe an einem primären sekundären oder tertiärem Kohlenstoffatom tragen. Als besonders geeignet haben sich Methyl-, Ethyl-und tert.-Butylacrylat sowie -Methacrylat erwiesen.

Die ternären Polymerisate enthalten je I00 Gew.-Teile Ethylen 0,2 bis 5,0, vorzugsweise 0,3 bis 4,0 und insbesondere 0,35 bis 3,5 Gew.-Teile 2,4,4-Trimethylpenten-(I) und 2,0 bis 20, vorzugsweise 2,2 bis I5 und insbesondere 2,5 bis I0 Gew.-Teile der vorstehend genannten Monomeren.

Die erfindungsgemäßen Mischpolymerisate sind durch einen Schmelzindex MFI (I90/2,I6) von 0,4 bis 20,0, vorzugsweise 0,5 bis I0,0 und insbesondere von 0,6 bis 4,0 g/I0 min charakterisiert. Die Bestimmung der vorstehend genannten Schmelzindices erfolgt nach der deutschen Norm DIN 53735. Empirisch läßt sich jedem gemessenen Schmelzindex eine nach dem Verfahren der Gelpermeationschromatographie bestimmte mittlere Molmasse zuordnen. Die entsprechenden Werte können der nachfolgenden Gegenüberstellung entnommen werden.

| MFI 190/2,16 (g/10 min) | mittlere Molmasse $(g \cdot mol^{-1})$ |
|---|---|
| 16,0–20,0 | $\sim$ 20.000 |
| 3,0 | $\sim$ 70.000 |
| 2,0 | $\sim$ 100.000 |
| 0,8 | $\sim$ 120.000 |
| 0,4 | $\sim$ 140.000 |

Die Dichte der Mischpolymerisate beträgt 0,9l5 bis 0,960, vorzugsweise 0,920 bis 0,945 und insbesondere 0,925 bis 0,940 g/cm³.

Die neuen Produkte werden weiterhin durch ihre Schlagzugzähigkeit beschrieben, die im Bereich von 850 bis 2.600, vorzugsweise 870 bis 2.500 und insbesondere 900 bis 2.200 mJ/mm² liegt. Die Bestimmung der Schlagzugzähigkeit erfolgt nach der deutschen Norm DIN 53448.

Die beanspruchten binären und ternären Mischpolymerisate des Ethylens lassen sich durch Mischpolymerisation der Monomeren bei 50 bis 350 MPa und l00 bis 350°C in Gegenwart von Sauerstoff oder Radikale bildenden Verbindungen herstellen. Hierzu werden Mischungen aus l00 Gew.-Teilen Ethylen, 0,4 bis l0,0 Gew.-Teilen 2,4,4-Trimethylpenten(l) und gegebenenfalls l,5 bis 25,0 Gew.-Teile Vinylester oder Vinylether oder Ester aus Acrylsäure oder Methacrylsäure und einem aliphatischen $C_1$-bis $C_8$-Alkohol polymerisiert.

Da sich im allgemeinen die Polymerisationsgeschwindigkeit der Monomeren unterscheidet, weicht die Zusammensetzung des Polymerisats häufig von der Zusammensetzung des Monomerengemisches ab.

Die Polymerisation erfolgt unter einem Druck von 50 bis 350, vorzugsweise l00 bis 300, insbesondere von l25 bis 275 MPa. Die Polymerisationstemperatur beträgt l00 bis 300, vorzugsweise l20 bis 325 und insbesondere l30 bis 300°C.

Als Polymerisationsinitiatoren werden Sauerstoff oder Radikale bildende Verbindungen eingesetzt. Zu den Radikale bildenden Verbindungen gehören organische Peroxide, Hydroperoxide oder Azoverbindungen. Von den organischen Peroxiden haben sich tert.-Butylperbenzoat, tert.-Butylperoxipivalat und Dilaurylperoxid bewährt. Als Azoverbindung gelangt mit Erfolg Azo-bis(isobutyronitril) zum Einsatz. Besonders bewährt hat sich tert.Butylperoxipivalat. Die Verbindungen können allein oder im Gemisch verwendet werden. Die Polymerisationsinitiatoren werden in einer Konzentration von 3 bis 50, vorzugsweise 5 bis 40, insbesondere l0 bis 25 Gew.-ppm, bezogen auf Ethylen, eingesetzt. Man führt sie der Polymerisation direkt oder als Lösung in einem organischen Lösungsmittel zu. Als Lösungsmittel dienen Kohlenwasserstoffe wie Isooctan, Benzol, Toluol oder Benzinfraktionen.

Ein wesentliches Merkmal des erfindungsgemäßen Herstellungsverfahrens der neuen Polymerisate ist die Abwesenheit gesonderter Molekularmassenregler (Moderatoren) während der Polymerisation. Molekularmassenregler sind Verbindungen, die den Monomeren in unterschiedlicher Konzentration zugesetzt werden, um das Wachstum des polymeren Moleküls und damit die Molmasse des Polymerisats zu beeinflussen. Zu den Molmassenreglern gehören Vertreter der unterschiedlichsten Stoffklassen. Als Beispiele seien genannt: Wasserstoff, Alkane, unverzweigte alpha-Olefine, Alkohole, Aldehyde und Ketone (vgl. Fortschr. Hochpolym.-Forschg. 7(3), 386-448).

In diesem Zusammenhang muß darauf hingewiesen werden, daß Diisobutylen, d.h. ein Gemisch, das hauptsächlich aus 2,4,4-Trimethylpenten-(l) und -(2) besteht, selbst als Molmassenregler wirkt (vgl. Fortschr. Hochpolym.-Forschung 7(3), 4l7). Dementsprechend ergeben Monomerengemische mit einem höheren Gehalt an 2,4,4-Trimethylpenten-(l) Polymerisate mit einer niedrigeren Molmasse als Monomerengemische in denen die 2,4,4-Trimethylpenten(l)-Konzentration geringer ist.

Erfolgt die Polymerisation außer in Gegenwart von 2,4,4-Trimethylpenten-(l) in Anwesenheit weiterer Molmassenregler, so erhält man Polymerisate, die zur Herstellung von Folien nicht geeignet sind. Insbesondere die Ausziehfähigkeit ist unbefriedigend. Daruber hinaus weisen die Folien Stippen auf und sind wegen fehlender Transparenz als Verpackungsmittel unbrauchbar. Es war nicht vorauszusehen, daß der Verzicht auf die getrennte Zugabe eines Moderators neben dem gleichzeitig als Molekularmassenregler wirkenden Comonomeren 2,4,4-Trimethylpenten-(l) zu Polymerisaten führt, die sich hervorragend zu Folien mit ausgezeichneten Eigenschaften verarbeiten lassen.

Das nach. dem erfindungsgemäßen Verfahren umgesetzte Monomerengemisch enthält stets 2,4,4-Trimethylpenten-(l). Sein Anteil beträgt 0,4 bis 10,0 insbesondere 0,6 bis 8,0, vorzugsweise 0,7 bis 7,0 Gew.-Teile je 100 Gew.-Teile eingesetztes Ethylen.

2,4,4-Trimethylpenten-(l) kann auch in Form einer Mischung mit anderen $C_8$-Olefinen der Polymerisationsreaktion zugeführt werden. Als 2,4,4-Trimethylpenten-(l) enthaltende Mischung besonders geeignet ist Diisobutylen. Hierunter versteht man das im wesentlichen aus 2,4,4-Trimethylpenten-(l) und 2,4,4-Trimethylpenten-(2) beste hende Gemisch, das bei der Dimerisierung von 2-Methylpropen(i-Butylen) mit sauren Katalysatoren (z.B. Ionenaustauschern) gebildet wird. Es enthält je nach Herstellung 50 bis 90, vorzugsweise 55 bis 80 und insbesondere 60 bis 75 Gew.-Teile 2,4,4-Trimethylpenten-(l), jeweils bezogen auf 100 Gew.-Teile Diisobutylen.

Neben Ethylen und 2,4,4-Trimethylpenten-(l) kann das nach dem erfindungsgemäßen Verfahren polymerisierte Monomerengemisch noch weitere Monomere enthalten. Hierzu gehören Vinylester, Vinylether, Acrylsäureester und Methacrylsäureester. Ihr Anteil im Monomerengemisch beträgt 1,5 bis 25,0, vorzugsweise 2,0 bis 20,0 und insbesondere 3,0 bis 15,0 Gew.Teile, jeweils bezogen auf 100 Gew.-Teile eingesetztes Ethylen. Die Verweilzeit des Monomerengemisches in der Polymerisationsstufe beträgt 30 bis 180, vorzugsweise 50 bis 160 und insbesondere 60 bis 140 sek.

Das erfindungsgemäße Verfahren kann in den für die Polymerisation von Ethylen und Ethylen enthaltenden Monomerengemischen bekannten Hochdruckreaktoren durchgeführt werden. Hierzu gehören Rührautoklaven und Rohrreaktoren (vgl. Ullmanns Encyclopädie der Technischen Chemie, 4. Auflage, Verlag Chemie Weinheim-Basel 1980, Band 19, Seite 169, 172 bis 175). Bei Verwendung eines Rohrreaktors kann das gesamte, bereits Initiatoren enthaltende Monomerengemisch in einem Strom dem Reaktor zugeführt werden. Besonders vorteilhaft ist es jedoch, einen Rohrreaktor mit Kaltgas-und Initiatornachdosierung zu verwenden und das Monomerengemisch in mindestens zwei Teilströme aufzuteilen. Hierbei wird ein Teilstrom dem Reaktoreingang zugeführt, weitere Teilströme werden längs des Reaktors, meist im Bereich einer Spitzentemperatur, der Reaktionszone zugeführt.

Aus den neuen Mischpolymerisaten hergestellte Folien besitzen hohe Festigkeit (gemessen als Schlagzugzähigkeit) und bemerkenswerte Transparenz. Diese Eigenschaften bleiben auch bei niedrigen Temperaturen, wie sie z.B. bei der Lagerung von Tiefkühlkost auftreten, erhalten. Darüber hinaus zeichnet sich das Material durch hohe Ausziehfähigkeit (gemessen als geringste Foliendicke, die beim Ausziehen ohne Reißen oder Auftreten von Löchern hergestellt werden kann) aus; sie beträgt 5 bis 30, vorzugsweise 8 bis 25 und insbesondere 10 bis 20 μm.

In den nachfolgenden Beispielen A - F werden die neuen Polymerisate und das Verfahren zu ihrer Herstellung näher erläutert. die Beispiele 1 - 14 betreffen Vergleichsversuche, die zeigen, daß die Einhaltung der beanspruchten Merkmale (Stoffeigenschaften und Verfahrensparameter) erforderlich sind, um die Aufgabe zu lösen, die der Erfindung zugrundeliegt.

In den Beispielen wird 2,4,4-Trimethylpenten-(l) stets in Form des als Diisobutylen bezeichneten Gemisches verschiedener $C_8$-Kohlenwasserstoffe eingesetzt. Es hat folgende Zusammensetzung:

|  | Gew.-% |
|---|---|
| 2,4,4-Trimethylpenten-(1) | 71,3 |
| 2,4,4-Trimethylpenten-(2) | 22,0 |
| weitere isomere Trimethylpentene | 3,3 |
| isomere Dimethylhexene | 1,6 |
| 2,4,4-Trimethylpentan<br>trans-2,2-Dimethylhexen-(3) | 1,8 |

Es siedet bei 101°C, seine Dichte $d_4^{20}$ ist 0,711 g/cm³.

Zur Bestimmung der Stoffeigenschaften wurden folgende Verfahren herangezogen:

Schmelzindex MFI (190/2,16) g/10 min: gemessen nach DIN 53735; Schlagzugzähigkeit gemessen nach DIN 53448; Ausziehfähigkeit bestimmt durch Verarbeitung des Mischpolymerisats auf einer Blasfolienanlage. Der Durchsatz beträgt 7 kg/h, der Düsenspalt hat einen Durchmesser von 1 mm, das Aufblasverhältnis ist 2,5 : 1; Transparenz: visuelle Bewertung der Folien.

Der 2,4,4-Trimethylpenten-(I)-Anteil in den Polymerisaten wird aus der (gaschromatographisch bestimmten) Differenz des 2,4,4-Trimethylpenten-(I)-Gehaltes des Monomerengemisches an Reaktoreingang und Reaktorausgang ermittelt.

Der Vinylacetat-Anteil in den Polymerisaten wird durch Pyrolyse und Messung der freigesetzten Essigsäure mittels wäßriger Jodid/Jodat-Lösung bestimmt.

Beispiele A - F:

Die Mischpolymerisate werden in einem kontinuierlich betriebenen Hochdruckreaktor (Rührautoklav), dem ein Hochdruckgasabscheider und ein Niederdruckgasabscheider nachgeschaltet sind, hergestellt. Das für die Polymerisation bestimmte Monomerengemisch wird auf den gewünschten Druck gebracht und in den Hochdruckreaktor eingeleitet. Gleichzeitig setzt man die für die Aufrechterhaltung der Polymerisation benötigte Menge Polymerisationsinitiator zu (tert.-Butylperoxipivalat, gelöst in Benzin). Die Verweilzeit des Reaktionsgemisches im Hochdruckreaktor beträgt etwa 90 Sekunden.

Reaktionsbedingungen, Initiatorkonzentration (bezogen auf eingesetztes Ethylen) und Zusammensetzung des Monomerengemisches sind der Tabelle I, die Eigenschaften der Mischpolymerisate der Tabelle 2 zu entnehmen.

Beispiele I bis 5 (Vergleichsversuche):

Die Beispiele I bis 5 werden analog den Beispielen A - F durchgeführt, abweichend von diesen enthält das Monomerengemisch jedoch gesondert einen Molmassenregler(Moderator). Die Einzelheiten der Versuchsdurchführung sind Tabelle I zu entnehmen.

Zusammensetzung und Eigenschaften der nach den Beispielen I bis 5 erhaltenen Mischpolymerisate sind in Tabelle 2 aufgeführt.

Die erfindungsgemäßen Mischpolymerisate der Beispiele A - F weisen gegenüber den zum Vergleich hergestellten Mischpolymerisaten der Beispiele I - 6 eine beträchtlich gesteigerte Schlagzugzähigkeit, eine deutlich erhöhte Ausziehfähigkeit, sowie eine signifikante Verbesserung der Transparenz auf. Sie sind daher zur Herstellung von Folien besonders geeignet.

Beispiele 6 bis 14 (Vergleichsversuche):

Verzichtet man auf die Zugabe von Diisobutylen und ersetzt es durch übliche Molekulargewichtsregler, so erhält man Produkte, die sich ebenfalls nicht zur Herstellung von Folien eignen. Die zu den Beispielen 6 bis 14 gehörenden Reaktionsbedingungen sind wiederum Tabelle I, die Eigenschaften der resultierenden Mischpolymerisate Tabelle 2 zu entnehmen.

Tabelle 1: <u>Herstellung der Mischpolymerisate</u>

| Bei-spiel | Druck (MPa) | Tempe-ratur ($^\circ$C) | Initiator | | Monomerengemisch (Gew.-Teile je 100 Gew.-Teile $C_2H_4$) | | | |
| | | | Art | Konz. (ppm) | $DIB^1$ | $VA^2$ | Moderator | |
| | | | | | | | Art | Menge |
|---|---|---|---|---|---|---|---|---|
| A | 250 | 230 | a | 15 | 2,4 | – | – | – |
| B | 250 | 230 | a | 15 | 1,7 | – | – | – |
| C | 250 | 190 | a | 12 | 2,0 | – | – | – |
| D | 250 | 160 | a | 12 | 3,5 | – | – | – |
| E | 250 | 230 | a | 14 | 1,6 | 2,7 | – | – |
| F | 250 | 230 | a | 19 | 1,1 | 7,1 | – | – |
| 1 | 250 | 230 | a | 15 | – | – | aa | 2,1 |
| 2 | 250 | 230 | a | 13 | – | – | aa | 1,5 |
| 3 | 250 | 230 | a | 15 | 0,7 | – | bb | 0,2 |
| 4 | 250 | 230 | a | 12 | 0,9 | – | cc | 2,6 |
| 5 | 250 | 230 | a | 21 | 1,0 | 6,6 | cc | 1,6 |
| 6 | 250 | 230 | b | 11,5 | – | – | cc | 7,2 |
| 7 | 250 | 230 | c | 5 | – | – | aa | 2,3 |
| 8 | 250 | 230 | b | 38 | – | – | dd | 0,55 |
| 9 | 250 | 230 | d | 30 | – | – | bb | 0,2 |

Tabelle 1: Fortsetzung

| Bei-spiel | Druck (MPa) | Tempe-ratur (°C) | Initiator Art | Initiator Konz. (ppm) | Monomerengemisch (Gew.-Teile je 100 Gew.-Teile $C_2H_4$) DIB[1] | VA[2] | Moderator Art | Moderator Menge |
|---|---|---|---|---|---|---|---|---|
| 10 | 250 | 230 | c | 5 | – | – | ee | 5,3 |
| 11 | 250 | 230 | c | 20 | – | – | ff | 0,3 |
| 12 | 250 | 230 | a | 25 | – | – | gg | 1,7 |
| 13 | 250 | 230 | a | 9 | – | – | hh | 2,3 |
| 14 | 250 | 230 | a | 27 | – | – | ii | 1,7 |

Initiatoren:
a: tert.Butylperoxipivalat
b: Isononanoylperoxid
c: tert.Butylperoxi.-3,5,5-trimethylhexanoat
d: Bis-(2-ethylvenyl)peroxidicarbonat

Moderatoren:
aa: Propen
bb: Propanal
cc: Propan
dd: Methylethylketon
ee: Buten/Butan 1:1
ff: Cyclohexen
gg: n-Hexen-1
hh: Butanol
ii: n-Octen-1
[1] : Diisobutylen
[2] : Vinylacetat

0 254 022

Tabelle 2: <u>Eigenschaften der Mischpolymerisate</u>

| Bei-spiel | Produktzusammen-setzung (Gew.-Teile) | | | MFI 190/2,16 (g/10min) | Dichte (g/cm$^3$) | Schlag-zugzä-higkeit (mJ/mm$^2$) | Aus-zieh-fähig-keit (μm) | Trans-parenz *) |
|---|---|---|---|---|---|---|---|---|
| | Ethylen | TMP[1] | VA[2] | | | | | |
| A | 100 | 1,2 | – | 2,0 | 0,926 | 1075 | 14 | 1-2 |
| B | 100 | 1,0 | – | 0,6 | 0,925 | 1250 | 20 | 1-2 |
| C | 100 | 1,1 | – | 2,5 | 0,927 | 925 | 12 | 2 |
| D | 100 | 1,8 | – | 2,6 | 0,930 | 900 | 10 | 2 |
| E | 100 | 0,8 | 2,4 | 2,1 | 0,925 | 1350 | 15 | 2 |
| F | 100 | 0,6 | 6,2 | 2,2 | 0,927 | 1525 | 19 | 1-2 |
| 1 | 100 | – | – | 2,6 | 0,921 | 575 | 32 | 4 |
| 2 | 100 | – | – | 0,6 | 0,921 | 390 | 24 | 4 |
| 3 | 100 | 0,4 | – | 2,5 | 0,923 | 425 | 35 | 4 |
| 4 | 100 | 0,5 | – | 2,3 | 0,925 | 375 | 28 | 4 |
| 5 | 100 | 0,6 | 6,1 | 2,8 | 0,930 | 610 | 40 | 4 |
| 6 | 100 | – | – | 2,5 | 0,927 | 400 | –**) | 3 |
| 7 | 100 | – | – | 2,6 | 0,921 | 390 | 22 | 3-4 |
| 8 | 100 | – | – | 2,8 | 0,927 | 370 | –**) | 4 |
| 9 | 100 | – | – | 2,8 | 0,929 | 250 | –**) | 3 |

Tabelle 2: Fortsetzung

| Bei-spiel | Produktzusammen-setzung (Gew.-Teile) | | | MFI 190/2,16 (g/10min) | Dichte (g/cm³) | Schlag-zugzä-higkeit (mJ/mm²) | Auszieh-fähig-keit (μm) | Trans-parenz *) |
|---|---|---|---|---|---|---|---|---|
| | Ethylen | TMP¹ | VA² | | | | | |
| 10 | 100 | - | - | 2,6 | 0,925 | 410 | 50 | 4 |
| 11 | 100 | - | - | 2,6 | 0,927 | 400 | -**) | 3-4 |
| 12 | 100 | - | - | 2,4 | 0,926 | 390 | 20 | 3-4 |
| 13 | 100 | - | - | 2,3 | 0,926 | 390 | -**) | 4 |
| 14 | 100 | - | - | 2,7 | 0,925 | 350 | 23 | 3 |

1 2,4,4-Trimethylpenten-(1)
2 Vinylacetat

**) nicht gemessen

*) Transparenz:
1: sehr gut
2: gut/zufriedenstellend
3: unbefriedigend
4: mangelhaft

## Ansprüche

1.) Mischpolymerisate des Ethylens, die je l00 Gew.-Teile Ethylen 0,2 bis 5,0 Gew.-Teile 2,4,4-Trimethylpenten-(l) und gegebenenfalls 2,0 bis 20,0 Gew.-Teile Vinylester oder Vinylether oder Ester der Acrylsäure oder der Methacrylsäure mit aliphatischen $C_1$-bis $C_8$-Alkoholen enthalten mit einem Schmelzindex MFI (l90/2,l6) von 0,4 bis 20 g/l0 min, einer Dichte von 0,9l5 bis 0,960 g/cm³ und einer Schlagzugzähigkeit von 850 bis 2.600 mJ/mm².

2.) Verfahren zur Herstellung von Mischpolymerisaten nach Anspruch I bei 50 bis 350 MPa und I00 bis 350°C in Gegenwart von Sauerstoff oder Radikale bildenden Verbindungen als Polymerisationsinitiatoren, dadurch gekennzeichnet, daß man Mischungen aus I00 Gew.-Teilen Ethylen, 0,4 bis I0 Gew.-Teilen 2,4,4-Trimethylpenten(I) und gegebenenfalls I,5 bis 25 Gew.-Teilen Vinylester oder Vinylether oder Ester aus Acrylsäure oder Methacrylsäure und einem aliphatischen $C_1$-bis $C_8$-Alkohol polymerisiert.

3.) Verfahren nach Anspruch 2, dadurch gekennzeichnet, daß 2,4,4-Trimethylpenten-(I) in Form einer Mischung aus 2,4,4-Trimethylpenten-(I) mit anderen, acht Kohlenstoffatome enthaltenden Olefinen eingesetzt wird.

4.) Verfahren nach Anspruch 3, dadurch gekennzeichnet, daß als 2,4,4-Trimethylpenten-(I) enthaltende Mischung Diisobutylen eingesetzt wird.

5.) Verfahren nach einem oder mehreren der Ansprüche 2 bis 4, dadurch gekennzeichnet, daß die Verweilzeit in der Polymerisationsstufe 30 bis I80 Sekunden beträgt.

6.) Verfahren nach einem oder mehreren der Ansprüche 2 bis 5, dadurch gekennzeichnet, daß als Polymerisationsinitiator organische Peroxide oder Azoverbindungen verwendet werden.

7.) Verfahren nach einem oder mehreren der Ansprüche 2 bis 6, dadurch gekennzeichnet, daß als organische Peroxide tert.-Butylperbenzoat, tert.-Butylperoxipivalat und/oder Dilaurylperoxid und als Azoverbindung Azobis(isobutyronitril eingesetzt werden.

8.) Verwendung der Mischpolymerisate nach Anspruch I zur Herstellung von Folien.